# FASCICULE DE BREVET EUROPEEN

(11) **EP 3 503 319 B1**
(45) Date de publication et mention de la délivrance du brevet: **06.01.2021**
(21) Numéro de dépôt: 18205056.7
(22) Date de dépôt: 08.11.2018
(51) Int. Cl.: H02B 1/20

(54) **ENSEMBLE COMPRENANT UN DISPOSITIF DE DISTRIBUTION DE COURANT ET UN DISPOSITIF DE MAINTIEN ET DE POSITIONNEMENT DE CE DISPOSITIF DE DISTRIBUTION DE COURANT DANS UN COFFRET ELECTRIQUE**
BAUGRUPPE MIT EINER STROMVERTEILUNGSVORRICHTUNG UND EINER VORRICHTUNG ZUM HALTEN UND POSITIONIEREN DIESER STROMVERTEILUNGSVORRICHTUNG IN EINEM SCHALTKASTEN
ASSEMBLY COMPRISING A POWER DISTRIBUTION DEVICE AND A DEVICE FOR HOLDING AND POSITIONING THIS POWER DISTRIBUTION DEVICE IN AN ELECTRICAL BOX

(30) Priorité: 21.12.2017 FR 1762690
(43) Date de publication de la demande: 26.06.2019
(73) Titulaire: Schneider Electric Industries SAS, 92500 Rueil Malmaison (FR)
(72) Inventeur: BURNOT, Claude, 38050 Grenoble (FR); BADIN, Didier, 38050 Grenoble (FR)
(74) Mandataire: Colette, Marie-Françoise

(56) Documents cités:
- EP-A1- 2 383 849
- DE-A1-102012 108 088
- US-A1- 2017 353 015

## Description

### DOMAINE TECHNIQUE

La présente invention concerne un ensemble comprenant un dispositif de distribution de courant et un dispositif de maintien et de positionnement de ce dispositif de distribution dans un coffret électrique, ledit dispositif étant destiné à alimenter des rangées d'appareillages électriques montés sur un support de montage dans le coffret, ledit dispositif comportant, logé dans un boîtier isolant, une barre destinée à véhiculer le neutre et au moins une barre destinée à véhiculer une phase, lesdites barres étant disposées sensiblement parallèlement les unes par rapport aux autres, et sensiblement perpendiculairement à la direction longitudinale des supports de montage, et supportant chacune des éléments de raccordement à un câble ou analogue.

### ETAT DE LA TECHNIQUE

On connaît le document EP 2 383 849 décrivant un tel dispositif de distribution de courant disposé verticalement dans un coffret électrique. Dans ce document, le dispositif est fixé sur des supports vissés dans le coffret, ce qui nécessite un outil.

### EXPOSE DE L'INVENTION

La présente invention résout ces inconvénients et propose un ensemble comprenant un dispositif de distribution de courant et un dispositif de maintien et de positionnement de ce dispositif de distribution dans un coffret électrique, de conception simple, et permettant de réaliser un tel maintien et positionnement sans l'usage de vis de fixation.

A cet effet, la présente invention a pour objet un ensemble comprenant un dispositif de distribution de courant et un dispositif de maintien et de positionnement de ce dispositif de distribution dans un coffret électrique, selon la revendication 1.

Selon une caractéristique particulière, le premier mouvement entraîne le déplacement du dispositif de distribution suivant une direction sensiblement perpendiculaire au plan de la paroi de fond du coffret et en direction du coffret, tandis que le second mouvement entraîne le déplacement du dispositif de distribution sensiblement parallèlement au plan précité et sensiblement perpendiculairement à la direction longitudinale des supports de montage, en direction du bas du coffret.

Selon une autre caractéristique, les moyens de coulissement précités comportent des éléments de retenue appartenant à l'(aux) élément(s) support, ces éléments étant aptes à coopérer avec des plots appartenant au dispositif de distribution, lesdits plots étant agencés de manière à former des glissières destinées à recevoir à coulissement les éléments de retenue.

Selon une caractéristique particulière, les éléments de support sont au nombre de deux et comportent chacun deux éléments de retenue aptes à coopérer avec respectivement deux glissières formées par les plots.

Selon une autre caractéristique, les points durs précités sont réalisés par l'intermédiaire d'excroissances prévues sur les plots et aptes à coopérer avec les éléments de retenue.

Selon une autre caractéristique, ces éléments de support sont aptes à être fixés sur toute la longueur d'un montant fixé sur la paroi de fond du coffret, ledit montant s'étendant suivant une direction sensiblement perpendiculaire à la direction longitudinale des supports de montage.

Selon une caractéristique particulière, ce dispositif est mis en place verticalement dans un coffret électrique pour assurer l'alimentation en courant d'une ou plusieurs rangées d'appareils montés sur des supports de montage.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective, illustrant la partie intérieure d'un coffret électrique équipé d'un ensemble selon l'invention,
- Les figure 2, 3 et 4 sont des vues partielles en perspective, illustrant trois étapes successives permettant la fixation du dispositif de distribution de courant sur la paroi de fond du coffret,
- Les figures 5 à 8 sont des vues partielles du dispositif selon l'invention, en coupe longitudinale suivant une direction longitudinale du dispositif, et
- La figure 9 est une vue de détail de la figure précédente.

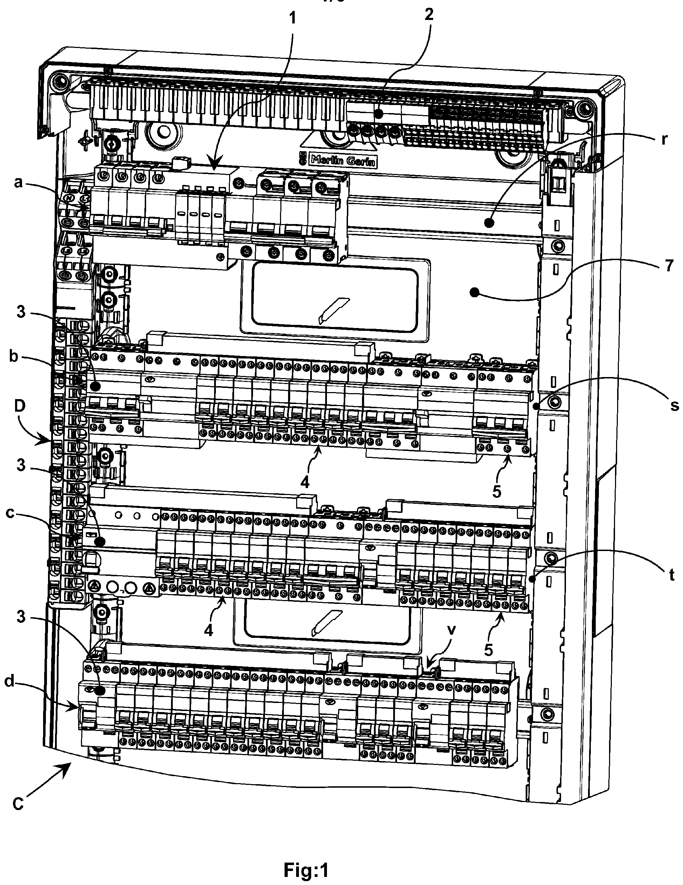

Sur la figure 1, on voit un coffret électrique C comportant quatre rangées d'appareillage a,b,c,d montés sur des rails de montage r,s,t,v, lesdits appareillages étant alimentés en courant par un dispositif de distribution de courant D selon l'invention.

Sur le premier rail r est monté un appareil de protection principal 1 ou appareil de tête de tableau, relié en amont à des moyens d'alimentation électriques 2, et en aval au dispositif de distribution D de manière à alimenter ce dernier en courant.

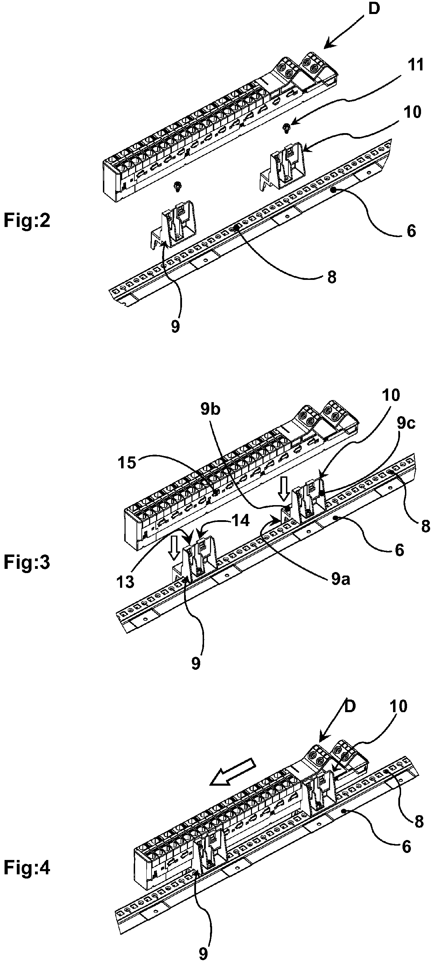

Sur les trois autres rails s,t,v sont disposés différents groupes d'appareillages protégés par un appareil dit tête de groupe 3, lequel est alimenté en courant par le dispositif de distribution selon l'invention pour ensuite distribuer le courant à tous les appareils de protection de départ 4,5. Sur la figure 2, le dispositif de distribution de courant D est amené au-dessus d'un montant vertical 6 appartenant à la paroi de fond 7 du coffret, de telle manière que ce dispositif s'étende parallèlement à ce montant 6. Ce montant 6 présente sur toute sa longueur des orifices 8 aptes à permettre la fixation de deux éléments support 9,10 sur ledit montant 6, par l'intermédiaire de vis 11, lesdites vis 11 traversant les éléments support 9,10 et le montant 6.

Chaque élément support 9,10 est constitué de trois parties 9a,9b,9c comprenant une première 9a et une seconde 9b partie formant un angle droit l'une par rapport à l'autre, ces deux parties 9a,9b étant destinées à venir en appui sur deux parois du montant, et une troisième partie 9c s'étendant sensiblement perpendiculairement à la seconde partie 9b et comportant deux éléments de retenue 13,14 aptes à coopérer avec des plots 15 agencés à l'intérieur du dispositif de distribution de courant de manière à former deux glissières e,f aptes à coopérer respectivement avec les deux éléments de retenue. Chaque glissière est constituée de deux parties successives sensiblement perpendiculaires l'une par rapport à l'autre.

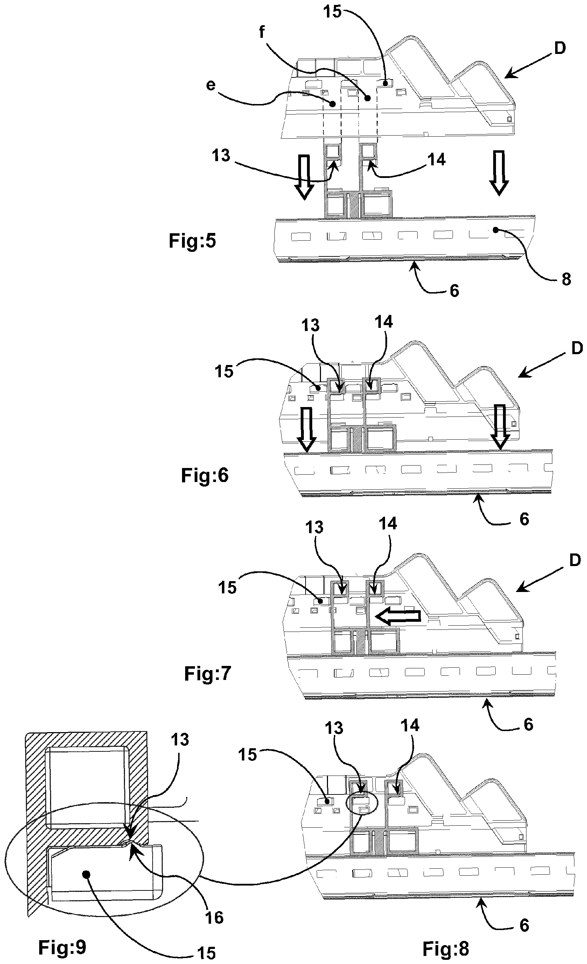

Ces éléments de retenue 13,14, plus particulièrement visibles sur les figures 5 à 9, présentent en coupe suivant un plan perpendiculaire à la paroi de fond 7 une forme de P, et les plots 15 formant glissière e,f présentent en coupe suivant ce même plan une forme sensiblement rectangulaire.

Sur les figures 3 et 5, les éléments support 9,10 sont fixés sur le montant 6, et le dispositif de distribution D est déplacé vers le montant 6 jusqu'à ce que les éléments de retenue 13,14 s'engagent dans la première partie de glissière formée par les plots 15. Après quoi, le déplacement du dispositif vers le montant 6 est poursuivi, les éléments de retenue 13,14 coulissant dans la première partie de glissière e,f jusqu'à son extrémité et jusqu'à ce que le dispositif arrive pratiquement en contact avec le montant 6 (fig.6).

Dans cette position, le dispositif de distribution D peut alors être déplacé vers le bas du coffret, les éléments de retenue 13,14 se déplaçant alors dans les secondes parties de glissières f (figures 4 et 7).

A la fin de ce déplacement (figure 8), le positionnement et le maintien du dispositif de distribution D sont obtenus.

Le passage du point dur (fig.9), formé par une excroissance 16 prévue sur les plots, à la fin de ce second déplacement, permet à l'utilisateur d'une part, de verrouiller la position du dispositif de distribution D par rapport au montant 6, et d'autre part, d'indiquer à l'utilisateur cette position de verrouillage du dispositif.

Le dispositif selon l'invention permet un montage du dispositif de distribution sans outil. Le mouvement de montage est un mouvement en L, c'est-à-dire entraînant deux déplacements successifs du dispositif selon respectivement deux directions perpendiculaires l'une par rapport à l'autre. Ce type de mouvement permet un verrouillage robuste, garantissant le maintien du dispositif en place lorsque l'électricien vérifie la bonne connexion des fils en exerçant une traction sur ces derniers.

Le dispositif de distribution de courant peut être fixé en n'importe quel endroit sur toute la longueur des montants, les points de fixation étant avantageusement espacés l'un de l'autre de 25 mm.

Bien entendu, l'invention n'est pas limitée au mode de réalisation décrit et illustré qui n'a été donné qu'à titre d'exemple.

Au contraire, l'invention comprend tous les équivalents techniques des moyens décrits ainsi que leurs combinaisons si celles-ci son réalisées selon les revendications annexées.

## Revendications

1. Ensemble comprenant un dispositif de distribution de courant (D) et un dispositif de maintien et de positionnement de ce dispositif de distribution de courant (D) dans un coffret électrique (C), ledit dispositif de distribution (D) étant destiné à alimenter des rangées d'appareillages électriques (a,b,c,d) montées sur un support de montage (r,s,t,v) dans le coffret, ledit dispositif de distribution (D) comportant, logé dans un boîtier isolant, une barre destinée à véhiculer le neutre et au moins une barre destinée à véhiculer une phase, lesdites barres étant disposées sensiblement parallèlement les unes par rapport aux autres, et sensiblement perpendiculairement à la direction longitudinale des supports de montage (r,s,t,v) chaque barre supportant des éléments de raccordement à un câble ou analogue, l'ensemble comportant aussi des moyens de coulissement (13,14,15) prévus en partie sur le dispositif de distribution (D) et en partie sur au moins un éléments support (9,10) solidarisable à un montant fixé sur la paroi de fond du coffret (C), **caractérisé en ce qu'**ils permettent le coulissement du dispositif de distribution (D) par rapport à l'(aux) élément(s) support (9,10) suivant un premier et un second mouvements, ces deux mouvements successifs formant un L, le deuxième mouvement se terminant par le passage d'un point dur assurant le verrouillage du dispositif de distribution (D) par rapport au coffret (C).

2. Ensemble selon la revendication 1, **caractérisé en ce que** le premier mouvement entraîne le déplacement du dispositif de distribution (D) suivant une direction sensiblement perpendiculaire au plan de la paroi de fond (7) du coffret (C) et en direction du coffret (C), tandis que le second mouvement entraîne le déplacement du dispositif de distribution (D) sensiblement parallèlement au plan précité et sensiblement perpendiculairement à la direction longitudinale des supports de montage (r,s,t,v) en direction du bas du coffret (C).

3. Ensemble selon la revendication 1 ou 2, **caractérisé en ce que** les moyens de coulissement précités comportent des éléments de retenue (13,14) appartenant à l'(aux) élément(s) support, aptes à coopérer avec des plots (15) appartenant au dispositif de distribution (D), lesdits plots (15) étant agencés de manière à former des glissières (e,f) destinées à recevoir à coulissement respectivement les éléments de retenue précités (13,14).

4. Ensemble selon la revendication 3, **caractérisé en ce que** les éléments de support (9,10) sont au nombre de deux et comportent chacun deux éléments de retenue (13,14) aptes à coopérer avec respectivement deux glissières (e,f) formées par les plots.

5. Ensemble selon la revendication 3, **caractérisé en ce que** les points durs précités sont réalisés par l'intermédiaire d'excroissances (16) prévues sur les plots (15) et aptes à coopérer avec les éléments de retenue précités (13,14).

6. Ensemble selon l'une quelconque des revendications précédentes, **caractérisé en ce que** ces éléments de support (9,10) sont aptes à être fixés sur toute la longueur d'un montant (6) fixé sur la paroi de fond (7) du coffret (C), ledit montant (6) s'étendant suivant une direction sensiblement perpendiculaire à la direction longitudinale des supports de montage (r,s,t,v).

7. Coffret ou armoire électrique comportant un ensemble selon l'une quelconque des revendications précédentes, **caractérisé en ce que** l'ensemble est mis en place verticalement dans le coffret (C) ou l'armoire électrique pour assurer l'alimentation en courant d'une ou plusieurs rangées d'appareils montés sur des supports de montage.

## Patentansprüche

1. Einheit, die eine Stromverteilungsvorrichtung (D) und eine Vorrichtung zum Halt und zur Positionierung dieser Stromverteilungsvorrichtung (D) in einem Schaltkasten (C) enthält, wobei die Verteilungsvorrichtung (D) dazu bestimmt ist, Reihen von elektrischen Geräten (a, b, c, d) zu versorgen, die auf eine Montagehalterung (r, s, t, v) im Kasten montiert sind, wobei die Verteilungsvorrichtung (D) in einem Isoliergehäuse untergebracht eine Schiene, die dazu bestimmt ist, den Nullleiter zu transportieren, und mindestens eine Schiene aufweist, die dazu bestimmt ist, eine Phase zu transportieren, wobei die Schienen im Wesentlichen parallel zueinander und im Wesentlichen lotrecht zur Längsrichtung der Montagehalterungen (r, s, t, v) angeordnet sind, wobei jede Schiene Elemente zum Anschluss an ein Kabel oder Ähnliches trägt,
wobei die Einheit auch Gleiteinrichtungen (13, 14, 15) aufweist, die zum Teil auf der Verteilungsvorrichtung (D) und zum Teil auf mindestens einem Trägerelement (9, 10) vorgesehen sind, das fest mit einem Steg verbunden werden kann, der an der Rückwand des Kastens (C) befestigt ist, **dadurch gekennzeichnet, dass** sie das Gleiten der Verteilungsvorrichtung (D) bezüglich des (der) Trägerelements (Trägerelemente) (9, 10) gemäß einer ersten und einer zweiten Bewegung erlauben, wobei diese zwei aufeinanderfolgenden Bewegungen ein L bilden, wobei die zweite Bewegung durch den Durchgang eines schwergängigen Punkts endet, der die Verriegelung der Verteilungsvorrichtung (D) bezüglich des Kastens (C) gewährleistet.

2. Einheit nach Anspruch 1, **dadurch gekennzeichnet, dass** die erste Bewegung die Verschiebung der Verteilungsvorrichtung (D) gemäß einer Richtung im Wesentlichen lotrecht zur Ebene der Rückwand (7) des Kastens (C) und in Richtung des Kastens (C) bewirkt, während die zweite Bewegung die Verschiebung der Verteilungsvorrichtung (D) im Wesentlichen parallel zur erwähnten Ebene und im Wesentlichen lotrecht zur Längsrichtung der Montagehalterungen (r, s, t, v) in Richtung des unteren Teils des Kastens (C) bewirkt.

3. Einheit nach Anspruch 1 oder 2, **dadurch gekennzeichnet, dass** die erwähnten Gleiteinrichtungen zum (zu den) Trägerelement(en) gehörende Halteelemente (13, 14) aufweisen, die mit zur Verteilungsvorrichtung (D) gehörenden Blöcken (15) zusammenwirken können, wobei die Blöcke (15) so angeordnet sind, dass sie Gleitschienen (e, f) bilden, die dazu bestimmt sind, die erwähnten Haltelemente (13, 14) gleitend aufzunehmen.

4. Einheit nach Anspruch 3, **dadurch gekennzeichnet, dass** es zwei Trägerelemente (9, 10) gibt und sie je zwei Halteelemente (13, 14) aufweisen, die mit zwei von den Blöcken gebildeten Gleitschienen (e, f) zusammenwirken können.

5. Einheit nach Anspruch 3, **dadurch gekennzeichnet, dass** die erwähnten schwergängigen Punkte mittels Ausstülpungen (16) hergestellt werden, die auf den Blöcken (15) vorgesehen sind und mit den erwähnten Halteelementen (13, 14) zusammenwirken können.

6. Einheit nach einem der vorhergehenden Ansprüche, **dadurch gekennzeichnet, dass** diese Trägerelemente (9, 10) über die ganze Länge eines an der Rückwand (7) des Kastens (C) befestigten Stegs (6) befestigt werden können, wobei der Steg (6) sich gemäß einer Richtung im Wesentlichen lotrecht zur Längsrichtung der Montagehalterungen (r, s, t, v) erstreckt.

7. Schaltkasten oder -schrank, der eine Einheit nach einem der vorhergehenden Ansprüche aufweist, **dadurch gekennzeichnet, dass** die Einheit senkrecht im Schaltkasten (C) oder -schrank platziert wird, um die Stromversorgung einer oder mehrerer Reihen von Geräten zu gewährleisten, die auf Montagehalterungen montiert sind.

## Claims

1. Assembly comprising a current distribution device (D) and a device for holding and for positioning this current distribution device (D) in an electrical panel (C), said distribution device (D) being intended to supply power to rows of electrical switchgear (a, b, c, d) that are mounted on a mounting support (r, s, t, v) in the panel, said distribution device (D) comprising, housed in an insulating casing, one busbar that is intended to convey the neutral and at least one busbar that is intended to convey a phase, said busbars being positioned substantially in parallel with respect to one another, and substantially perpendicularly to the longitudinal direction of the mounting supports (r, s, t, v), each busbar bearing connection elements for connection to a cable or the like,
the assembly also including sliding means (13, 14, 15) that are provided partly on the distribution device (D) and partly on at least one support element (9, 10) that can be securely connected to a rail that is attached to the back wall of the panel (C), **characterized in that** they allow the distribution device (D) to slide with respect to the one or more support elements (9, 10) in a first and a second movement, these two successive movements forming an L, the second movement ending in the passing of a hard point, which locks the distribution device (D) with respect to the panel (C).

2. Assembly according to Claim 1, **characterized in that** the first movement results in the displacement of the distribution device (D) in a direction that is substantially perpendicular to the plane of the back wall (7) of the panel (C) and in the direction of the panel (C), while the second movement results in the displacement of the distribution device (D) substantially parallel to the aforementioned plane and substantially perpendicularly to the longitudinal direction of the mounting supports (r, s, t, v) in the direction of the bottom of the panel (C).

3. Assembly according to Claim 1 or 2, **characterized in that** the aforementioned sliding means include retaining elements (13, 14) belonging to the one or more support elements, which elements are capable of cooperating with pads (15) belonging to the distribution device (D), said pads (15) being arranged so as to form runners (e, f) that are intended to accept the aforementioned retaining elements (13, 14), respectively, for sliding.

4. Assembly according to Claim 3, **characterized in that** the support elements (9, 10) are two in number and each includes two retaining elements (13, 14) that are capable of cooperating with two runners (e, f), respectively, formed by the pads.

5. Assembly according to Claim 3, **characterized in that** the aforementioned hard points are produced via excrescences (16) that are provided on the pads (15) and are capable of cooperating with the aforementioned retaining elements (13, 14).

6. Assembly according to any one of the preceding claims, **characterized in that** these support elements (9, 10) are capable of being attached anywhere along a rail (6) that is attached to the back wall (7) of the panel (C), said rail (6) extending in a direction that is substantially perpendicular to the longitudinal direction of the mounting supports (r, s, t, v).

7. Electrical enclosure or panel including an assembly according to any one of the preceding claims, **characterized in that** the assembly is placed vertically in the electrical enclosure or panel (C) in order to supply current to one or more rows of switchgear that are mounted on mounting supports.
